# EUROPÄISCHE PATENTSCHRIFT

(11) **EP 1 881 225 B1**
(45) Veröffentlichungstag und Bekanntmachung des Hinweises auf die Patenterteilung: **22.12.2010**
(21) Anmeldenummer: 07013975.3
(22) Anmeldetag: 17.07.2007
(51) Int. Cl.: F16F 1/02, F16F 1/18, A47C 23/04

(54) **Federelement**
Spring element
Elément de ressort

(30) Priorität: 21.07.2006 DE 202006011272 U
(43) Veröffentlichungstag der Anmeldung: 23.01.2008
(73) Patentinhaber: Diemer & Dr. Jaspert GbR, 85630 Grasbrunn (DE)
(72) Erfinder: Diemer, Gregor, 85456 Wartenberg (DE); Jaspert, Bodo, Dr., 85630 Neukeferloh (DE)
(74) Vertreter: Manitz, Finsterwald & Partner GbR

(56) Entgegenhaltungen:
- WO-A-01/81785
- DE-U1- 20 202 050
- DE-U1- 29 820 996

## Beschreibung

Die vorliegende Erfindung betrifft ein Federelement mit einer Grundplatte und von der Grundplatte im wesentlichen radial nach außen geführten Federarmen, die jeweils paarweise an ihren von der Grundplatte weg weisenden Enden aufeinander zu abgewinkelt sind und gemeinsam eine Tragplatte tragen, insbesondere derart, dass sich die Federarme und die Grundplatte sowie die Tragplatte in Federrichtung betrachtet nicht gegenseitig überdecken.

Ein solches Federelement ist beispielsweise aus der EP 1 335 148 A2 sowie aus der zur selben Familie gehörenden DE 202 02 050 U1 bekannt. Weiterer Stand der Technik ist in der WO 01/81785 A1 und der DE 298 20 996 U1 offenbart.

Der Erfindung liegt die Aufgabe zugrunde, ein derartiges Federelement weiterzubilden.

Diese Aufgabe wird dadurch gelöst, dass benachbarte Arme benachbarter Paare von Federarmen abschnittsweise einstückig miteinander ausgebildet sind.

Durch die zumindest abschnittsweise einstückige Ausbildung benachbarter Arme können diese jeweils versteift werden. Dadurch ergibt sich insbesondere eine höhere Stabilität des Federelements. Gute Ergebnisse lassen sich dabei erzielen, wenn benachbarte Arme in einem direkt an die Grundplatte anschließenden Abschnitt einstückig miteinander ausgebildet sind.

Eine Weiterbildung des erfindungsgemäßen Federelements besteht darin, dass die Federarme eines Paares im Bereich ihrer Abwinkelung einen verhältnismäßig großen Abstand voneinander aufweisen.

Durch den verhältnismäßig großen Abstand der Arme im Bereich ihrer Abwinkelung ergibt sich ein großer Hebelarm, der ebenfalls zu einer vorteilhaften Versteifung des Federelements führt. Hierfür können die an die Grundplatte anschließenden Abschnitte der Federarme eines Paares insbesondere voneinander weggeführt sein.

Noch eine Weiterbildung des erfindungsgemäßen Federelementes besteht darin, dass die Federarme an mindestens drei, bevorzugt vier, voneinander insbesondere gleichmäßig beabstandeten Stellen an jeder Trageplatte angreifen.

Auch hierdurch wird die Steifigkeit des Federelementes vorteilhaft erhöht. Besonders geeignet kann ein Angreifen der Federarme an mehreren Stellen der Tragplatten dadurch erreicht werden, dass sich jeder Federarm verzweigt und an mindestens zwei Stellen mit der zugehörigen Tragplatte verbunden ist.

Ein Ausführungsbeispiel der Erfindung ist in der Zeichnung dargestellt und wird nachfolgend beschrieben. Es zeigen, jeweils in schematischer Darstellung,
- Fig. 1: eine Draufsicht auf ein erfindungsgemäßes Federelement und
- Fig. 2: eine Seitenansicht des Federelements von Fig. 1.

Das dargestellte Federelement umfasst eine Grundplatte 1, an welche acht Federarme 2 angeformt sind. Die Federarme 2 sind radial von der Grundplatte 1 aus nach außen geführt und jeweils paarweise aufeinander zu abgewinkelt. Mit ihren abgewinkelten Abschnitten 3 tragen sie jeweils paarweise eine Tragplatte 4.

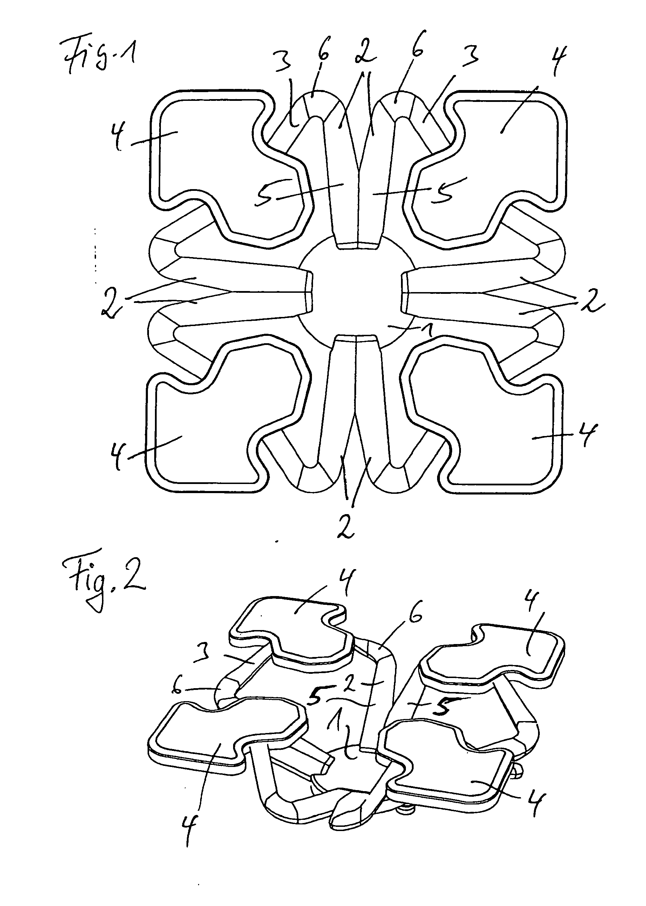

Wie man insbesondere in Fig. 1 erkennen kann, sind benachbarte Arme 2 benachbarter Paare von Federarmen 2 in einem an die Grundplatte 1 anschließenden Abschnitt 5 einstückig miteinander ausgebildet. Darüber hinaus erkennt man, dass die Federarme 2 eines jeden Federpaares im Bereich ihrer Abwinkelung 6 einen großen Abstand voneinander aufweisen. Hierfür sind die Federarme 2 nicht exakt radial, sondern unter einem Winkel zur Tangente an die Grundplatte 1 nach außen geführt. D.h., die an die Grundplatte anschließenden Abschnitte 5 der Federarme 2 eines jeden Paares sind voneinander weg geführt.

Gemäß einer hier nicht dargestellten Weiterbildung können die Federarme 2 jeweils verzweigt ausgebildet sein und an mindestens zwei Stellen mit der zugehörigen Tragplatte 4 verbunden sein. Hierfür können die Federarme 2 insbesondere im Bereich ihrer Abwinkelung 6 verzweigt sein. Grundsätzlich besteht aber auch die Möglichkeit, zusätzliche Federarme vorzusehen, die an weiteren Stellen jeder Tragplatte 4 angreifen.

## Patentansprüche

1. Federelement mit einer Grundplatte (1) und von der Grundplatte (1) im wesentlichen radial nach außen geführten Federarmen (2), die jeweils paarweise an ihren von der Grundplatte (1) weg weisenden Enden aufeinander zu abgewinkelt sind und gemeinsam eine Tragplatte (4) tragen, insbesondere derart, dass sich die Federarme (2) und die Grundplatte (1) sowie die Tragplatte (4) in Federrichtung betrachtet nicht gegenseitig überdecken,
**dadurch gekennzeichnet, dass**
benachbarte Arme (2) benachbarter Paare von Federarmen (2) abschnittsweise einstückig miteinander ausgebildet sind.

2. Federelement nach Anspruch 1,
**dadurch gekennzeichnet, dass**
die Federarme (2) in einem direkt an die Grundplatte (1) anschließenden Abschnitt (5) einstückig miteinander ausgebildet sind.

3. Federelement nach Anspruch 1 oder 2,
**dadurch gekennzeichnet, dass**
die Federarme (2) eines Paares im Bereich ihrer Abwinkelung (6) einen verhältnismäßig großen Abstand voneinander aufweisen.

4. Federelement nach Anspruch 3,
**dadurch gekennzeichnet, dass**
die an die Grundplatte (1) anschließenden Abschnitte (5) der Federarme (2) eines Paares voneinander weg geführt sind.

5. Federelement nach zumindest einem der vorhergehenden Ansprüche,
**dadurch gekennzeichnet, dass**
die Federarme an mindestens drei, bevorzugt vier, voneinander insbesondere gleichmäßig beabstandeten Stellen an jeder Trageplatte angreifen.

6. Federelement nach Anspruch 5,
**dadurch gekennzeichnet, dass**
sich jeder Federarm (2) verzweigt und an mindestens zwei Stellen mit der zugehörigen Tragplatte (4) verbunden ist.

## Claims

1. A spring element having a base plate (1) and having spring arms (2) which are led substantially radially outwardly from the base plate (1), which are each angled towards one another pairwise at their ends facing away from the base plate (1) and which together carry a support plate (4), in particular such that the spring arms (2) and the base plate (1) as well as the support plate (4) do not cover one another viewed in the spring direction,
**characterised in that**
adjacent arms (2) of adjacent pairs of spring arms (2) are made in one piece with one another section-wise.

2. A spring element in accordance with claim 1, **characterised in that** the spring arms (2) are made in one piece with one another in a section (5) directly adjoining the base plate (1).

3. A spring element in accordance with claim 1 or claim 2, **characterised in that** the spring arms (2) of a pair have a comparatively large spacing from one another in the region of their angling (6).

4. A spring element in accordance with claim 3, **characterised in that** the sections (5) of the spring arms (2) of a pair adjoining the base plate (1) are led away from one another.

5. A spring element in accordance with at least one of the preceding claims, **characterised in that** the spring arms engage at at least three, preferably four, points at each support plate which are spaced apart from one another, in particular equally.

6. A spring element in accordance with claim 5, **characterised in that** each spring arm (2) branches and is connected at at least two points to the associated support plate (4).

## Revendications

1. Élément de ressort comprenant une plaque de base (1) et des bras de ressort (2) dirigés sensiblement radialement vers l'extérieur depuis la plaque de base (1), qui sont repliés respectivement par paires en direction les uns des autres au niveau de leurs extrémités éloignées de la plaque de base (1) et portent conjointement une plaque porteuse (4), en particulier de telle manière que les bras de ressort (2) et la plaque de base (1) ainsi que la plaque porteuse (4) ne se recouvrent pas mutuellement, considérés en direction de débattement,
**caractérisé en ce que**
des bras voisins (2) de paires voisines de bras de ressort (2) sont réalisés par portion d'un seul tenant l'un avec l'autre.

2. Élément de ressort selon la revendication 1,
**caractérisé en ce que** les bras de ressort (2) sont réalisés, dans une portion (5) directement attenante à la plaque de base (1), d'un seul tenant l'un avec l'autre.

3. Élément de ressort selon la revendication 1 ou 2,
**caractérisé en ce que** les bras de ressort (2) d'une paire présentent, dans la région de leur pliage (6), une distance comparativement importante l'un par rapport à l'autre.

4. Élément de ressort selon la revendication 3,
**caractérisé en ce que** les portions (5), attenantes à la plaque de base (1), des bras de ressort (2) d'une paire sont dirigées en éloignement l'une de l'autre.

5. Élément de ressort selon l'une des revendications précédentes,
**caractérisé en ce que** les bras de ressort engagent chaque plaque porteuse en au moins trois et de préférence quatre emplacements, en particulier écartés régulièrement.

6. Élément de ressort selon la revendication 5,
**caractérisé en ce que** chaque bras de ressort (2) est ramifié et est relié à la plaque porteuse associée (4) en au moins deux emplacements.
